# EUROPEAN PATENT SPECIFICATION

(11) **EP 2 017 170 B1**
(45) Date of publication and mention of the grant of the patent: **28.04.2010**
(21) Application number: 08252432.3
(22) Date of filing: 17.07.2008
(51) Int. Cl.: B62J 23/00, B62J 15/00

(54) **Straddle-type vehicle**
Spreitzsitz-Fahrzeug
Véhicule de type monté à califourchon

(30) Priority: 19.07.2007 JP 2007188874
(43) Date of publication of application: 21.01.2009
(73) Proprietor: Yamaha Hatsudoki Kabushiki Kaisha, Shizuoka-ken 438-8501 (JP)
(72) Inventor: Ohzono, Gen c/o Yamaha Hatsudoki Kabushiki Kaisha, Iwata-shi Shizuoka-ken 438-8501 (JP)
(74) Representative: Lamb, Martin John Carstairs

(56) References cited:
- EP-A- 1 422 133
- FR-A- 2 709 465
- JP-A- 8 058 657
- JP-A- 11 059 528

## Description

### FIELD OF THE INVENTION

The present invention relates to a straddle-type vehicle, and in particular, to a vehicle having a mudguard disposed inside a front cover.

### BACKGROUND TO THE INVENTION

Typically, a body frame of a straddle-type vehicle includes a head pipe. The head pipe is a part through which a steering shaft is rotatably inserted. Steering handlebars are attached to a top end of the steering shaft, and front forks are attached to a bottom end thereof. A key cylinder, various electrical devices, and cable harnesses thereof are mounted around the head pipe. In a scooter-type motorcycle and the like, a front cover is disposed in front of such a head pipe. An under cover and an inner fender are attached below the front cover and define a mud cover against muddy water thrown up by a front wheel.

An under cover and inner fender arrangement are disclosed in, for example, JP-A-Hei 11-59528. This document discloses that as a mud cover against mud water splashed by a front wheel, a front cover is divided into a top cover and a bottom cover. A headlight is disposed on the top cover, and a bottom wall of the headlight closes an opening of the bottom cover.

A top of the inner fender is open so as to insert the front forks therethrough. Components such as cables of electrical components around the handlebars and the key cylinder are gathered around the head pipe. The opening at the top of the inner fender is not very large. However, there is a case that mud water splashed by the front wheel enters from such an opening at the top of the inner fender. In order to prevent a failure or the like of the vehicle, it is desirable to prevent mud water from entering from such an opening at the top of the inner fender and to protect the components such as the cables of the electrical components around the handlebars and the key cylinder against mud water as much as possible. JP-A-Hei 11-59528 discloses that the bottom wall of the headlight functions as a mud cover as described above. However, in this case, the ability to more freely position the headlight can be limited. The present invention provides a new scheme to more reliably prevent mud water from entering from the opening at the top of the inner fender and to more reliably protect the components such as the cables of the electrical components around the handlebars and the key cylinder against mud water.

A straddle-type vehicle according to the present invention is a straddle-type vehicle including a body frame having a head pipe that a steering shaft which attaches a handlebar at its top and a front fork at its bottom are inserted. A key cylinder is attached to the body frame around the head pipe, and a front cover is disposed in front of the head pipe. An inner fender having an opening at its top where the front fork is inserted therethrough is disposed below the front cover. A mudguard is attached to the opening at the top of the inner fender, and an upper section of the mudguard is attached to the key cylinder.

In a certain embodiment, the upper section of the mudguard may cover a backside of the key cylinder. The mudguard may also be attached to the key cylinder. In addition, in a certain embodiment, cables around the head pipe may be bundled by the mudguard.

### SUMMARY OF THE INVENTION

The straddle-type vehicle according to the present invention has the mudguard attached to the opening at the top of the inner fender, and the upper section of the mudguard is attached to the key cylinder. Therefore, it is difficult for mud water to enter inside a body cover from the opening at the top of the inner fender. Furthermore, in this straddle-type vehicle, the upper section of the mudguard is attached to the key cylinder. Therefore, it is possible for the mudguard to more reliably protect components such as cables of electrical components around the handlebars and the key cylinder against mud water.

In a case that the upper section of the mudguard covers a backside of the key cylinder, it is possible to directly protect the key cylinder against mud water. Also, in a case that the mudguard is attached to the key cylinder, the upper section of the mudguard is not easily removed from the body frame.

In a case that the cables around the head pipe are bundled by the mudguard, it is possible to easily put the cables around the head pipe together, and thus separate bundling member for bundling the cables becomes unnecessary. Therefore, it is possible to reduce the number of components and thus to reduce the cost.

An aspect of the present invention is set forth in the independent claim. Optional features of the present invention are set forth in the dependent claims

### BRIEF DESCRIPTION OF THE DRAWINGS

These and other aspects of the present invention will now be described, by way of example only, with reference to the accompanying drawings, in which:
FIG. 1 is a side view of a straddle-type vehicle according to an embodiment of the present invention;
FIG. 2 is a plan view showing a body frame of the straddle-type vehicle according to an embodiment of the present invention;
FIG. 3 is a left side view showing the body frame of the straddle-type vehicle according to an embodiment of the present invention;
FIG. 4 is a right side view showing a use condition of a mudguard of the straddle-type vehicle according to an embodiment of the present invention;
FIG. 5 is a bottom view showing a head pipe of the straddle-type vehicle according to an embodiment of the present invention;
FIG. 6 is a perspective view showing the structure of a body cover in the front side of the straddle-type vehicle according to an embodiment of the present invention;
FIG. 7 is a side view of the straddle-type vehicle according to an embodiment of the present invention;
FIG. 8 is a perspective view of the mudguard of the straddle-type vehicle according to an embodiment of the present invention;
FIG. 9 is a plan view showing a band section of the mudguard of the straddle-type vehicle according to an embodiment of the present invention;
FIG. 10 is a rear view of the mudguard of the straddle-type vehicle according to an embodiment of the present invention; and
FIG. 11 is a left side view of the mudguard of the straddle-type vehicle according to an embodiment of the present invention.

### DETAILED DESCRIPTION OF THE DRAWINGS

A description will hereinafter be made of a straddle-type vehicle according to an embodiment of the present invention with reference to the drawings. In the drawings, the same reference numeral is given to members and parts having the same function. It should be understood that the present invention is not limited to the embodiment below.

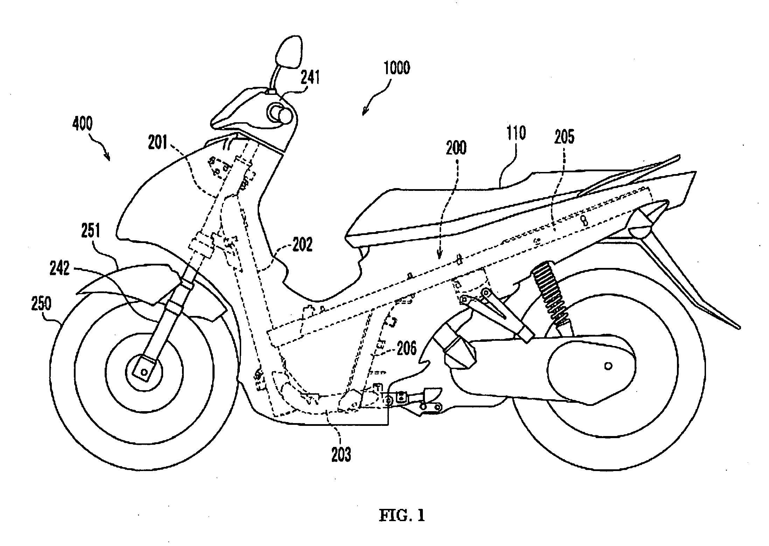

As shown in FIG. 1, a straddle-type vehicle 1000 according to the present embodiment is a scooter-type motorcycle, and a body cover 400 made of resin is attached to a body frame 200.

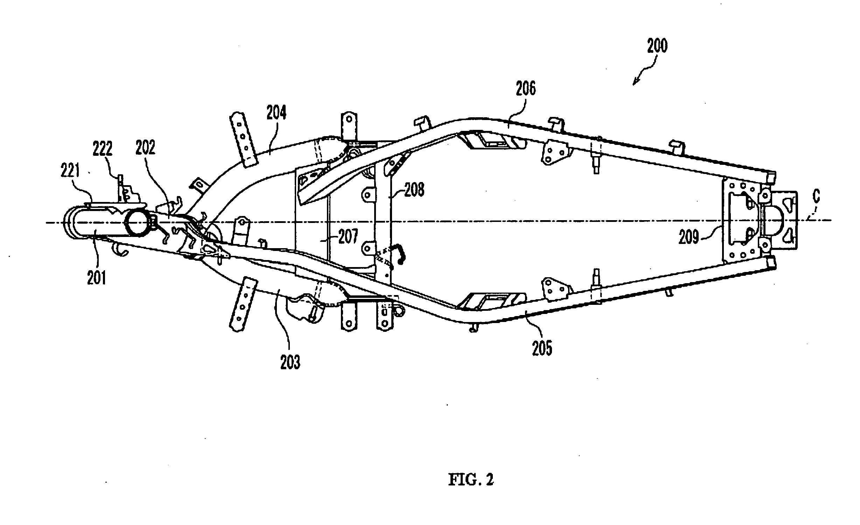

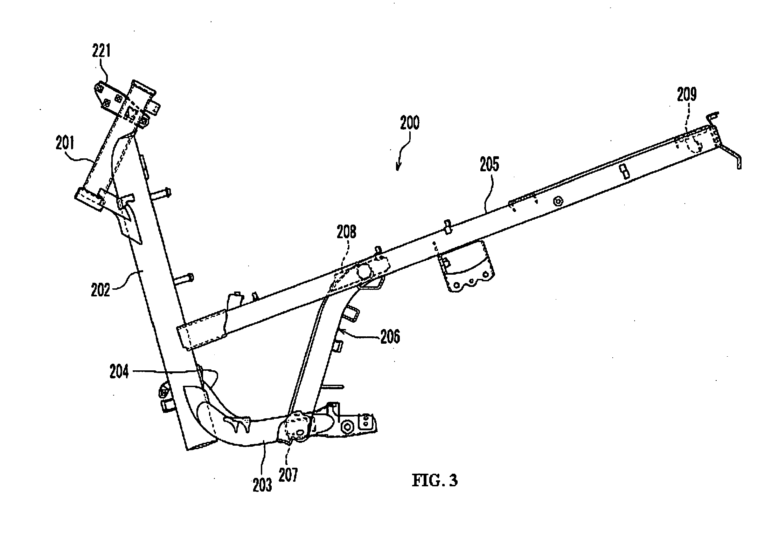

In this embodiment, as shown in FIGs. 2 and 3, in the body frame 200, a head pipe 201, a main tube 202, left and right down tubes 203, 204, and left and right seat rails 205, 206 are respectively welded together. Cross members 207 to 209 and various brackets 221, 222 are attached to the body frame 200 in order to secure the rigidity thereof, and also in order to mount various components of the straddle-type vehicle such as the body cover 400, a seat 110, an engine, a radiator, and a fuel tank to predetermined positions.

In this embodiment, the head pipe 201 is disposed in a front side of the body frame 200 along a center plane c (vehicle center) in a vehicle width direction. The main tube 202 is welded to a rear of the head pipe 201. A steering shaft (not shown) is inserted through the head pipe 201. As shown in FIG. 1, the steering shaft has handlebars 241 attached to the top thereof, and has front forks 242 attached to the bottom thereof. Specifically, the steering shaft is rotatably attached to the head pipe 201, and has the handlebars 241 attached to the top end thereof and the front forks 242 attached to the bottom end thereof. A front wheel 250 is attached to ends of the front forks 242. In this embodiment, a front fender 251 is mounted so as to cover an upper side of the front wheel 250.

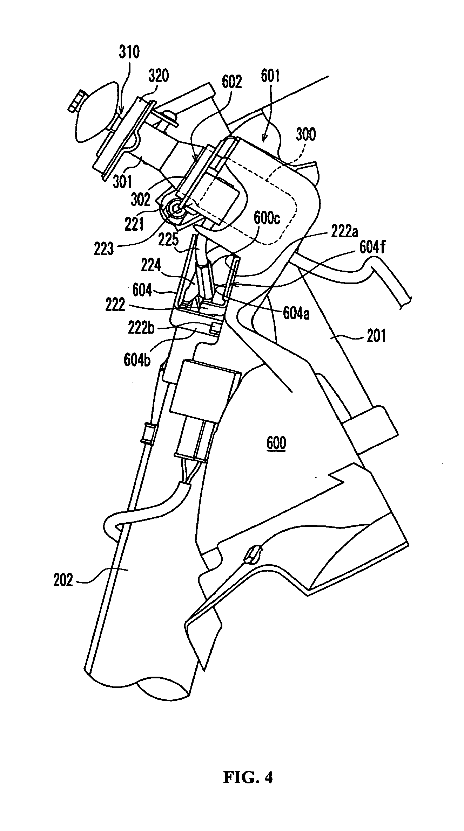

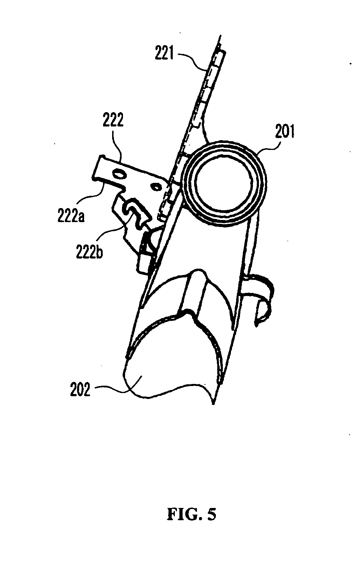

As shown in FIG. 4, a key cylinder 300 is mounted around the head pipe 201 of the body frame 200 inside the body cover 400. FIG. 5 is a view of the head pipe 201 of the body frame 200 and its surroundings as seen from below. In this embodiment, the body frame 200 has the brackets 221, 222 on the right side of the head pipe 201. As shown in FIGs. 2 and 4, the bracket 221 extends in a longitudinal direction of the body frame 200, has the key cylinder 300 attached to the rear side thereof, and has a front cover (not shown), which will be described later, attached to the front side thereof. The bracket 222 is attached to a portion of the main tube 202 near the head pipe 201, and a mudguard 600 is attached to the bracket 222. As shown in FIGs. 2 and 5, the bracket 222 is attached so as to extend to the right side of the body frame 200 from the main tube 202. As shown in FIG. 5, the bracket 222 includes a projection 222a and a retainer 222b. As shown in FIG. 4, the projection 222a is a part to which the mudguard 600 is attached. The mudguard 600 will be described later.

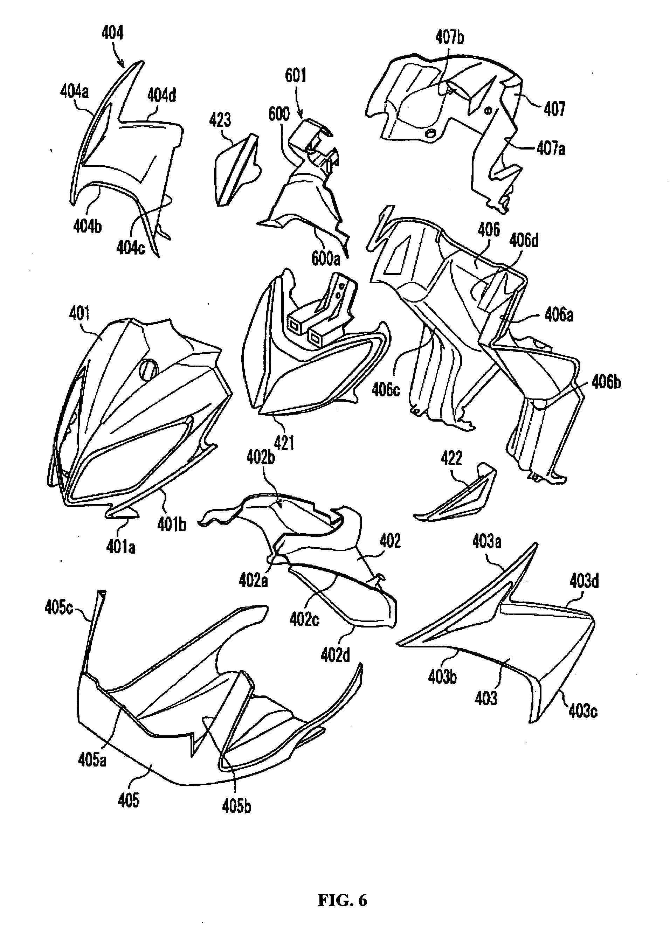

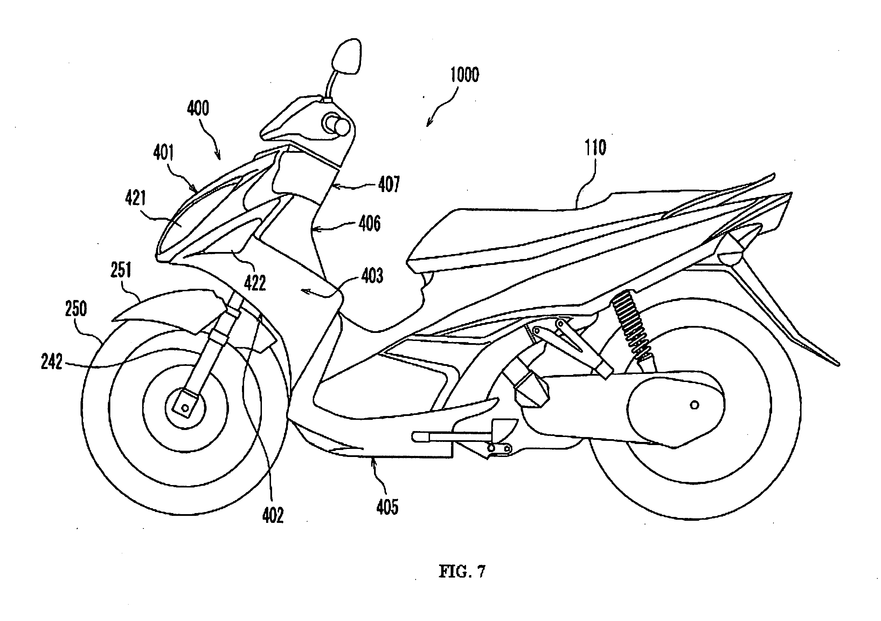

The body cover 400 of the straddle-type vehicle 1000 according to this embodiment will now be described. As shown in FIGs. 6 and 7, the body cover 400 has a front cover 401, an inner fender 402, side panels 403, 404, an under cover 405, a leg shield 406, and an inner panel 407 in the front side of the vehicle. The mudguard 600 is attached to the inner fender 402. Each member of such a body cover 400 will hereinafter be described in order.

As shown in FIGs. 1 and 7, the front cover 401 is a member disposed in front of the head pipe 201. In this embodiment, headlights 421 are attached to the front cover 401, and the front cover 401 is attached to the body frame 200. As shown in FIG. 6, upper front sections 402a of the inner fender 402 are attached to lower front sections 401a of the front cover 401. Upper edges 403a, 404a of the side panels 403, 404 are attached to both side edges 401b of the front cover 401.

As shown in FIG. 7, the inner fender 402 is a mud cover disposed below the front cover 401 and is a member to prevent mud water from entering the inside of the front cover 401 from the lower side thereof. In this embodiment, the inner fender 402 is disposed above the front wheel 250. Therefore, as shown in FIG. 6, an undersurface of the inner fender 402 is concaved upward so as not to interfere with the front wheel 250. The inner fender 402 has an opening at its top, and the upper portions of the front forks 242, which support the front wheel 250, are rotatably disposed in this opening 402b.

As described above, the upper front sections 402a of the inner fender 402 are attached to the lower front sections 401a of the front cover 401. Front lower edges 403b, 404b of the side panels 403, 404 are attached to both side edges 402c of the inner fender 402. An upper front edge 405a of the under cover 405 is attached to a rear bottom edge 402d of the inner fender 402. In addition, a bottom edge 600a of the mudguard 600 is attached to a rim of the opening 402b at the top of the inner fender 402.

The side panels 403, 404 are members attached to both side edges 401b of the front cover 401 and to both side edges 402c of the inner fender 402. In this embodiment, front flashers 422, 423 (turning signals) are respectively attached to the side panels 403, 404. Both side edges 405b, 405c in the front of the under cover 405 are respectively attached to rear lower edges 403c, 404c of the side panels 403, 404. Both side edges 406a in the front of the leg shield 406 and both side edges 407a in the front of the inner panel 407 are attached to rear edges 403d, 404d of the side panels 403, 404.

As shown in FIG. 7, the under cover 405 is a member covering the lower side of the body frame 200 in the front side of the vehicle. In this embodiment, as shown in FIG. 6, the under cover 405 is attached to the rear bottom edge 402d of the inner fender 402 and to the rear lower edges 403c, 404c of the side panels 403, 404, all of which are described above.

The leg shield 406 is a member disposed behind the head pipe 201 and the main tube 202, and, as shown in FIG. 7, is also a member to cover the front side of a rider' s legs when the rider (driver) is in a driving posture. In this embodiment, because the body frame 200 is disposed at the center in the vehicle width direction, a central section 406d of the leg shield 406 is concaved to the rear compared to both side sections 406b, 406c thereof in the vehicle width direction. Both side sections 406b, 406c in the vehicle width direction are not concaved to the rear, and spaces for footrests are secured in the corresponding sections. The inner panel 407 is attached to an upper inside of the leg shield 406.

As described above, the inner panel 407 is a member attached to the upper inside of the leg shield 406. As shown in FIG. 7, an upper section of the inner panel 407 is exposed from an upper section of the leg shield 406, and has an opening 407b where a key insertion slot of the key cylinder 300 attached to the body frame 200 as described above is exposed. The inner panel 407 and the leg shield 406 are disposed behind the head pipe 201 and the main tube 202 of the body frame 200. Then, both side edges 406a, 407a in the front of the leg shield 406 and the inner panel 407 are attached to the rear edges 403d, 404d of the left and the right side panels 403, 404.

As described above, in this embodiment, the front cover 401, the inner fender 402, the side panels 403, 404, the under cover 405, the leg shield 406, and the inner panel 407 are disposed around the head pipe 201 and the main tube 202 of the body frame 200.

As described above, the top of the inner fender 402 is opened so that the upper portions of the front forks 242 can be inserted therethrough. The mudguard 600 is attached to the opening 402b at the top of the inner fender 402.

In this embodiment, the mudguard 600 is a rubber piece having required flexibility and is made by forming rubber. The mudguard 600 is also referred to as a flap. In this embodiment, the bottom edge 600a of the mudguard 600 has a shape following the rim of the opening 402b at the top of the inner fender 402, and is attached to the opening 402b at the top of the inner fender 402 at a plurality of places. As shown in FIG. 4, the mudguard 600 is disposed on the lower rear portion of the head pipe 201.

In this embodiment, as shown in FIG. 4, an upper section 601 of the mudguard 600 is attached to the key cylinder 300. Also, in this embodiment, the upper section 601 of the mudguard 600 covers a backside of the key cylinder 300. That is, as shown in FIG. 4, the upper section 601 of the mudguard 600 extends to the key cylinder 300 and covers the backside of the key cylinder 300.

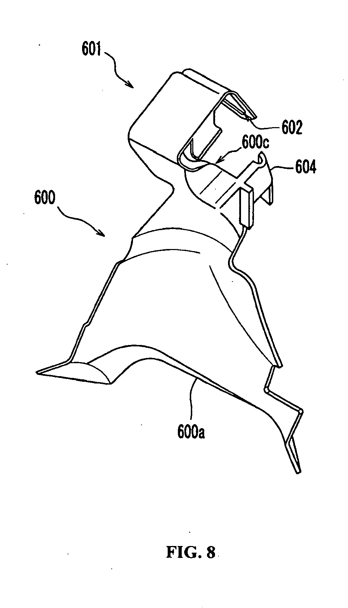

The mudguard 600 is attached to the key cylinder 300. That is, in this embodiment, as shown in FIG. 8, the upper section 601 of the mudguard 600 has an insertion opening 602 that the key cylinder 300 is inserted. In addition, as shown in FIG. 4, a middle portion 302 of the key cylinder 300 is thicker than a portion 301 extended from the key insertion slot 310. Such a middle portion 302 is attached to the bracket 221 attached to the head pipe 201. The insertion opening 602 of the mudguard 600 passes through such a key cylinder 300 to the upper portion thereof from the key insertion hole 310 side. The insertion opening 602 of the mudguard 600 is secured in a predetermined position by a fastener 223 that attaches the key cylinder 300 to the bracket 221. A shutter 320 for protecting the key insertion slot 310 is attached to the upper portion of the key cylinder 300 after the mudguard 600 is passed through the key cylinder 300. As described above, in this embodiment, the mudguard 600 is attached to the key cylinder 300 and cannot easily be removed from the key cylinder 300.

In this embodiment, the key cylinder 300 and cable harnesses of various electrical components, of headlights 421, and of the front flashers 422, 423 (turning signal) are placed around the head pipe 201. In this embodiment, as shown in FIG. 4, the mudguard 600 bundles cables 224, 225 around the head pipe 201.

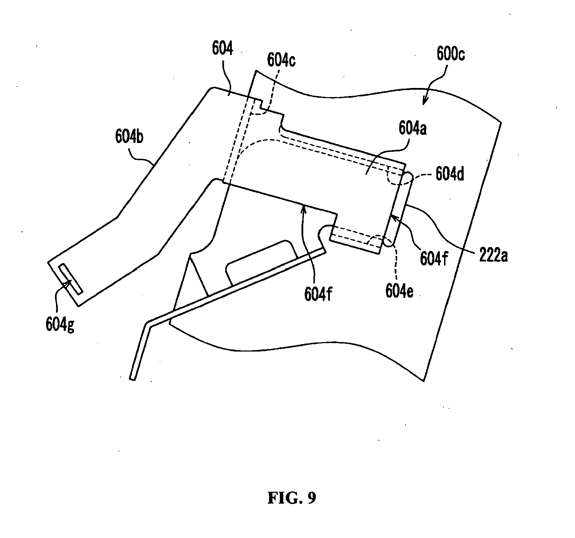

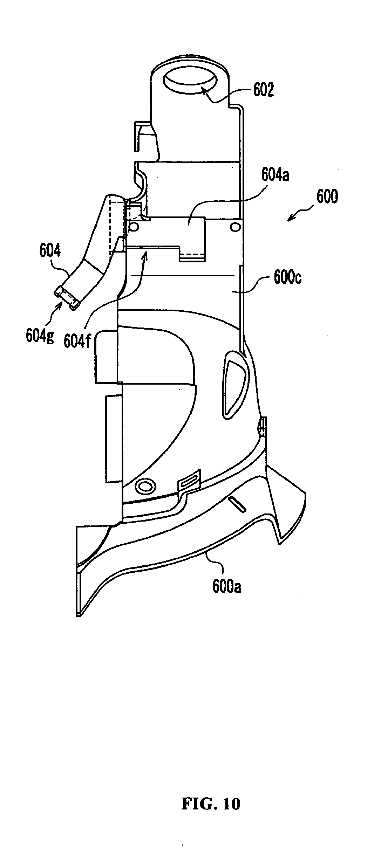

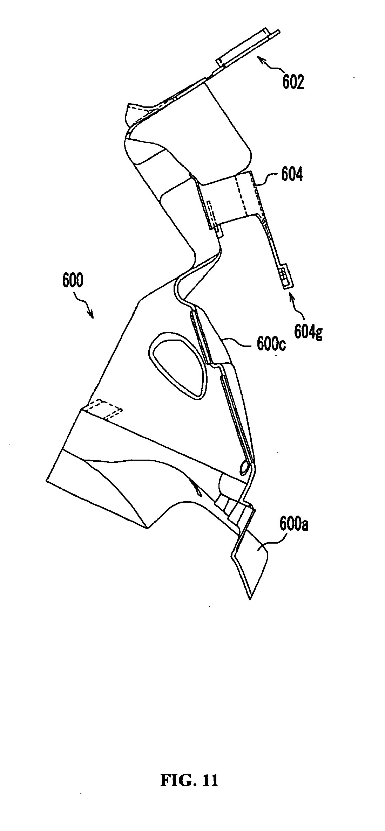

In this embodiment, as shown in FIG. 4, the mudguard 600 has a band section 604. A rear view of the mudguard 600 is shown in FIG. 10, and a left side view thereof is shown in FIG. 11. In this embodiment, the band section 604 is integrally formed with a rear surface 600c of the mudguard 600. As shown in FIG. 9, the band section 604 has a base 604a attached to the mudguard 600 and a portion 604b (band portion) extended from the mudguard 600. The base 604a overlaps with the rear surface 600c of the mudguard 600 and is formed such that a plurality of places on rims of the overlapped portions (three places 604c to 604e in this embodiment) continues the rear surface 600c of the mudguard 600. Then, an insertion hole 604f that the bracket 222 is inserted is formed between the rear surface 600c and the base 604a of the mudguard 600. An insertion hole 604g is also formed at an end of the band section 604. As shown in FIG. 5, the bracket 222 includes the projection 222a which is inserted in the insertion hole 604f at a base end of the band section 604 and the retainer 222b on which the insertion hole 604g at the end of the band section 604 is hooked.

As shown in FIG. 9, the mudguard 600 is attached to the bracket 222 by passing the projection 222a of the bracket 222 through such an insertion hole 604f. As shown in FIG. 4, the cables 224, 225 around the head pipe 201 are then bundled by the portion 604b (band portion) extended from the mudguard 600, and the insertion hole 604g at the end of the band section 604 is hooked on the retainer 222b of the bracket 222.

In this straddle-type vehicle 1000, the mudguard 600 is attached to the opening 402b at the top of the inner fender 402, and the upper section 601 of the mudguard 600 is attached to the key cylinder 300. Therefore, it is difficult for mud water to enter inside the body cover from the opening at the top of the inner fender 402. Furthermore, in this straddle-type vehicle 1000, the upper section 601 of the mudguard 600 is attached to the key cylinder 300. Therefore, it is possible for the mudguard 600 to more reliably protect the components such as the cables of the electrical components around the handlebars and the key cylinder against mud water.

Because the upper section 601 of the mudguard 600 is attached to the key cylinder 300, it is possible to completely conceal the inside of the body cover 400 from the opening 402b at the top of the inner fender 402. Thereby, the inside of the body cover 400 is hidden from the opening 402b at the top of the inner fender 402, and thus it becomes difficult to put a hand or a tool therein. Therefore, it is possible to suppress interference with the inside of the body cover 400 from the opening 402b at the top of the inner fender 402.

In this embodiment, the upper section of the mudguard 600 covers the backside of the key cylinder 300; therefore, it is possible to directly protect the key cylinder 300 against mud water. Furthermore, in this embodiment, because the mudguard 600 is attached to the key cylinder 300, the upper section of the mudguard 600 cannot easily be removed from the body frame 200.

In this embodiment, the cables 224, 225 around the head pipe 201 are bundled by the mudguard 600; therefore, it is possible to easily put together the cables 224, 225 around the head pipe 201. Also, because another bundling member for bundling the cables 224, 225 becomes unnecessary, it is possible to reduce the number of components and thus to reduce the cost.

Especially in this embodiment, the mudguard 600 has the band section 604, the body frame 200 has the bracket 222, to which the base 604a of the band section 604 is attached, around the head pipe 201, and the bracket 222 has the retainer 222b for retaining the end of the band section 604. Therefore, after attaching the mudguard 600 to the bracket 222, the cables 224, 225 around the head pipe 201 can be bundled by such a band section 604. As a result, it becomes easy to put together the cables 224, 225 by the mudguard 600.

As has been described so far, in this embodiment, the mudguard 600 is able to prevent entry of mud water from the opening 402b at the top of the inner fender 402, protect the components inside the body frame such as the key cylinder 300, and bind the cables 224, 225 disposed around the head pipe 201. As described above, the mudguard 600 has a plurality of functions. Accordingly, it is possible to reduce the number of components by eliminating, for example, a protector for protecting the backside of the key cylinder and a bundling member for bundling the cables. As a result, it is possible to reduce the manufacturing cost.

The description of the straddle-type vehicle according to one embodiment of the present invention has been made so far; however, the straddle-type vehicle according to the present invention is not limited to the above embodiment, and various modifications can be made thereto.

For example, it merely shows an example of the straddle-type vehicle according to the present invention in terms of the structure of the straddle-type vehicle such as the body frame, body cover, configuration, and structure, and can make various modifications. The same applies to the configuration, structure, and the like of the mudguard.

In addition, the present invention is applicable to various types of straddle-type vehicles having a front cover and an inner fender.

The above embodiment illustrates that the upper section of the mudguard 600 covers the backside of the key cylinder 300; however, the upper section of the mudguard 600 merely has to be attached to the key cylinder 300. In a configuration that the upper section of the mudguard 600 covers the backside of the key cylinder 300, it is possible to directly protect the key cylinder 300 against mud water. Furthermore, in the above embodiment, the insertion opening 602 is formed at the top of the mudguard 600, and the mudguard 600 is attached to the key cylinder 300 by passing the insertion opening 602 through the key cylinder 300. Such a structure merely shows an example of attaching the upper section of the mudguard 600 to the key cylinder 300, and it does not have to necessarily be adopted.

The present invention is utilized for a straddle-type vehicle having a front cover and an inner fender, for example. Straddle-type vehicles include various types of motorcycles, tricycles, and four-wheel buggies having a front cover and an inner fender.

### Description of Reference Numerals

1000: straddle-type vehicle
110 : seat
200: body frame
201 : head pipe
202 : main tube
203: down tube
205 : seat rail
221 : bracket
222: bracket
222a: projection
222b: retainer
224, 225: cable
242: front fork
251: front fender
300: key cylinder
310: key insertion slot
320: shutter
400: body cover
401: front cover
402: inner fender
403: side panel
405: under cover
406: leg shield
407: inner panel
421: headlight
422: front flasher
600: mudguard
601: upper section
602: insertion opening
604: band section

## Claims

1. A straddle-type vehicle (1000) comprising:
a body frame (200) having a head pipe (201);
a steering shaft inserted within the head pipe (201) and comprising handlebars (241) at an upper end thereof and a front fork (242) at a bottom end thereof;
a key cylinder (300) mounted around the head pipe (201) of the body frame (200);
a front cover (401) disposed in front of the head pipe (201);
an inner fender (402) disposed below the front cover (401) and having an upper opening (402b) to permit the front fork (242) to extend therethrough; and
a mudguard (600) attached to the upper opening (402b) of the inner fender (402) and to the key cylinder (300).

2. The straddle-type vehicle (1000) according to Claim 1, wherein the upper section of the mudguard (600) covers a backside of the key cylinder (300).

3. The straddle-type vehicle (1000) according to Claim 1 or 2, wherein an upper section (601) of the mudguard (600) is attached to the key cylinder (300).

4. The straddle-type vehicle (1000) according to Claim 1, 2 or 3, wherein cables (224, 225) around the head pipe (201) are bundled by the mudguard (600).

5. The straddle-type vehicle (100) according to Claim 4, wherein:
the mudguard (600) has a band section (604);
the body frame (200) has a bracket (222), to which a base of the band section (604) is attached, around the head pipe (201);
the bracket (222) has a part (222b) for retaining an end of the band section (604); and
the cables (224, 225) around the head pipe (201) are bundled by the band section (604).

6. The straddle-type vehicle (1000) according to any of the preceding claims, wherein the vehicle comprises a leg shield (406) disposed behind the head pipe (201) and the mudguard (600) is located between the front cover (401) and the leg shield (406).

## Patentansprüche

1. Spreizsitz-Fahrzeug (1000), das Folgendes umfasst:
einen Rahmen (200), der ein Steuerkopfrohr (201) hat,
eine Lenkstange, die innerhalb des Steuerkopfrohres (201) eingesetzt ist und Lenkbügel (241) an einem oberen Ende derselben und eine Vordergabel (242) an einem unteren Ende derselben umfasst,
einen Schließzylinder (300), der um das Steuerkopfrohr (201) des Rahmens (200) angebracht ist,
eine Frontabdeckung (401), die vor dem Steuerkopfrohr (201) angeordnet ist,
einen inneren Kotflügel (402), der unterhalb der Frontabdeckung (401) angeordnet ist und eine obere Öffnung (402b) hat, um zu ermöglichen, dass sich die Vordergabel (242) durch denselben erstreckt, und
ein Schutzblech (600), das an der oberen Öffnung (402b) des inneren Kotflügels (402) und an dem Schließzylinder (300) befestigt ist.

2. Spreizsitz-Fahrzeug (1000) nach Anspruch 1, wobei die obere Sektion des Schutzblechs (600) eine Rückseite des Schließzylinders (300) abdeckt.

3. Spreizsitz-Fahrzeug (1000) nach Anspruch 1 oder 2, wobei eine obere Sektion des Schutzblechs (600) an dem Schließzylinder (300) befestigt ist.

4. Spreizsitz-Fahrzeug (1000) nach Anspruch 1, 2 oder 3, wobei Kabel (224, 225) um das Steuerkopfrohr (201) durch das Schutzblech (600) gebündelt werden.

5. Spreizsitz-Fahrzeug (1000) nach Anspruch 4, wobei:
das Schutzblech (600) eine Bandsektion (604) hat,
der Rahmen (200) eine Stütze (222), an der eine Basis der Bandsektion (604) befestigt ist, um das Steuerkopfrohr (201) hat,
die Stütze (222) ein Teil (222b) hat, um ein Ende der Bandsektion (604) festzuhalten, und
die Kabel (224, 225) um das Steuerkopfrohr (201) durch die Bandsektion (604) gebündelt werden.

6. Spreizsitz-Fahrzeug (1000) nach irgendeinem der vorhergehenden Ansprüche, wobei das Fahrzeug einen Beinschutz (406) umfasst, der hinter dem Steuerkopfrohr (201) angeordnet ist, und das Schutzblech (600) zwischen der Frontabdeckung (401) und dem Beinschutz (406) angeordnet ist.

## Revendications

1. Véhicule du type monté à califourchon (1000), comprenant:
un châssis de carrosserie (200) comprenant un tuyau de tête (201);
un arbre de direction inséré dans le tuyau de tête (201) et comprenant des poignées de guidon (241) à son extrémité supérieure et une fourche avant (242) à son extrémité inférieure;
un cylindre à clé (300) monté autour du tuyau de tête (201) du châssis de carrosserie (200);
un capot avant (401) disposé devant le tuyau de tête (201);
un garde-boue interne (402) disposé sous le capot avant (401) et pourvu d'une ouverture supérieure (402b) pour permettre à la fourche avant (242) de s'étendre à travers la protection; et
un garde-boue (600) fixé sur l'ouverture supérieure (402b) du garde-boue interne (402) et sur le cylindre à clé (300).

2. Véhicule du type monté à califourchon (1000) selon la revendication 1, dans lequel la partie supérieure du garde-boue (600) couvre une face postérieure du cylindre à clé (300).

3. Véhicule du type monté à califourchon (1000) selon la revendication 1 ou 2, dans lequel une partie supérieure (601) du garde-boue (600) est fixée sur le cylindre à clé (300).

4. Véhicule du type monté à califourchon (1000) selon la revendication 1, 2 ou 3, dans lequel des câbles (224, 225) autour du tuyau de tête (201) sont réunis en faisceau par le garde-boue (600).

5. Véhicule du type monté à califourchon (1000) selon la revendication 4, dans lequel:
le garde-boue (600) comprend une section de bande (604);
le châssis de carrosserie (200) comporte une patte (222) sur laquelle une base de la section de bande (604) est fixée autour du tuyau de tête (201);
la patte (222) présente une partie (222b) destinée à retenir une extrémité de la section de bande (604); et
les câbles (224, 225) autour du tuyau de tête (201) sont réunis en faisceau par la section de bande (604).

6. Véhicule du type monté à califourchon (1000) selon l'une quelconque des revendications précédentes, dans lequel le véhicule comprend une protection de jambe (406) disposée derrière le tuyau de tête (201) et le garde-boue (600) est situé entre le capot avant (401) et la protection de jambe (406).
